# EUROPEAN PATENT SPECIFICATION

(11) **EP 0 796 548 B1**
(45) Date of publication and mention of the grant of the patent: **16.10.2002**
(21) Application number: 95920096.5
(22) Date of filing: 24.05.1995
(51) Int. Cl.: H04Q 11/06

(54) **NON-BLOCKING SWITCHING NETWORK**
BLOCKIERUNGSFREIES VERMITTLUNGSNETZ
RESEAU COMMUTE SANS BLOCAGE

(30) Priority: 25.05.1994 FI 942435
(43) Date of publication of application: 24.09.1997
(73) Proprietor: Marconi Communications Limited, Coventry, CV3 1HJ (GB)
(72) Inventor: AHOLA, Reijo, FIN-02600 Espoo (FI); KASURINEN, Timo, FIN-00140 Helsinki (FI); KELLOCK, Hamish, FIN-02300 Espoo (FI); SILLANPÄÄ, Tero, FIN-02610 Espoo (FI); URALA, Reino, FIN-00370 Helsinki (FI); VIITANEN, Esa, FIN-02210 Espoo (FI); WAINIO, Pekka, FIN-02630 Espoo (FI)
(74) Representative: Collier, Ian Terry
(86) International application number: FI9500288
(87) International publication number: WO95032599

(56) References cited:
- EP-A2- 0 606 728
- WO-A1-93/22859
- WO-A1-93/22886
- US-A- 5 285 444
- US-A- 5 303 077

## Description

The present invention relates to a non-blocking switching network for the cross-connection of transmission signals and especially SDH signals.

In the telecommunications field, within transmission technology a shift is being made from manual switching to the use of remote-controlled cross connect equipment for the transmission of time-divided signals in a telecommunications network.

The recommendations CCITT G.707 define the Synchronous Transport Module (STM-1) signals of the first level of SDH signals, the transmission rate of which is 155,520 Mbit/s. Other defined levels are STM-4 and STM-16. The recommendation CCITT G.708 defines the frame structure STM-N (in which N = 1, 4, 16). The STM-1 basic frame is composed of bytes (8 bits). The STM-1 frame enables the transmission of 63 subsystem containers (eg, TU-1², Tributary Unit, which can contain a 2 Mbit/s signal of an ordinary 30-channel PCM system). The STM-N frames are assembled into logical multiframes and, for example, in the AU-4 multiframe signal there are four frames, ie, STM-1 signals. The SDH signals, or Transport Modules, are formed from the signals of the subsystems by the interleaving of bytes.

Digital Cross Connect systems have been defined for SDH; the CCITT draft recommendations G.sdcx-1...-3. SDH DXC defines (abridging freely): "A digital SDH cross connect is a cross connect device having two or more interfaces at SDH rates (G.707) and being at least able to terminate a transmission section and to controllably, transparently connect and reconnect virtual containers (VC) between the interface ports."

The mentioned CCITT SDH recommendations try to define the logical function, ie, a functional structure of devices, but they avoid the detailed structural description of the devices.

An SDH DXC can transmit traffic between different SDH levels and connect traffic between different signals. The use of the cross connect also includes a possibility for remote control of routing, initialization of reserve routes, connection from one signal to several signals (broadcasting, copying), and so on. The connections are usually bidirectional.

The remote control of an SDH cross connect facilitates the making of connections and fast rearrangement. In addition, important functions can be implemented, such as network backup to protect against equipment and cable damage.

Cross connects can be implemented with a number of architectures. Known are the T²S structure and the TST structure. The first of these is completely non-blocking, but in large equipment the size of the switching field becomes large because the size of the switching field increases quadratically. The other structure is blocking if the capacity of the switching section is one-fold and copyable signals are required. The blocking properties of the structure can be removed by doubling the capacity of the switching section.

In WO-A-93/22 859 a complex configuration calculator is used to establish a blocking-free TST-cross-connect with a high utilisation for SDH connections.

The problem addressed by the invention is now to demonstrate an architecture for cross connection by means of which non-blocking switching can be implemented in cross connects, nevertheless retaining, in terms of the hardware required, an advantageous switching part also in large cross connect equipment.

This problem is solved by means of a switching network in accordance with claim 1. Other advantageous embodiments of the invention are disclosed in the dependent claims.

In a switching network in accordance with the invention the basic idea is to use relatively small switching elements instead of large switching elements. The switching network in accordance with the invention resembles a TST structure, but instead of the centremost space switch, a switching network in which time switchings are used, too, is possible. This is generally rendered by the combination of letters TS'(T&S)'S'T. The purpose of the time switchings of the centremost stage is substantially to remove the known blocking properties of the TST basic structure.

The switching network in accordance with the invention operates in a nearly non-blocking fashion since in the TS blocks of the input side and the ST blocks of the output side, at any given time there are outgoing just as many signals as are incoming. If it is desired to make the switching network completely non-blocking, the number of the centremost space switch blocks containing time switchings must be increased.

Adding blocks also yields a possibility for the very fast formation of new switching connections since after each connection the system always sees to it that all the extra blocks remain empty. This means that the switching is carried out in two phases whereby in the first phase the switching is done using empty blocks and in the second phase the time-consuming packing of the signals is carried out. If the number of space switch blocks containing the centremost time switchings is increased to double that of the minimum situation, it is in practice possible to guarantee the making of a sufficiently large number of switching connections simultaneously.

The cross connect architecture according to the invention can be used at all SDH levels, ie, for the cross connection of the defined signals STM-1...STM-16 and other corresponding signals. The switching network in accordance with the invention is also suitable for the cross connects of other transmission signals when the signals are of a frame structure and can be synchronized. Where SDH is involved, connections can be made solely at the AU-4 level or else at all AU-4, TU-3, TU-2 and TU-12 levels.

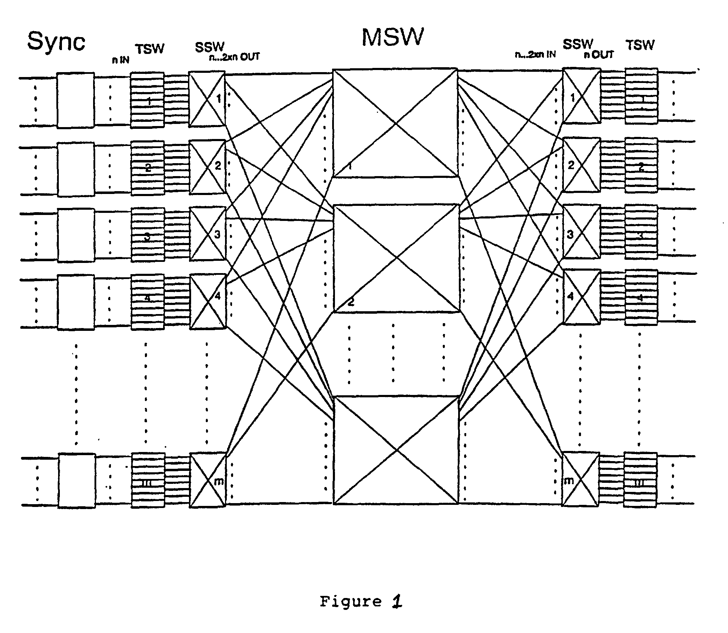

The invention is discussed in greater detail in the following with reference to the accompanying Figure 1, which shows a schematic block diagram of the switching network according to the invention.

The switching network shown in Figure 1 is of the form TS'(T&S)'S'T, whose basic structure resembles a TST structure but in place of the centremost space switch a space switch network is used in which time switching connections are also possible (T&S). The switching network is composed of relatively small switching elements, for example, 8*16, 16*8, 16*16.

Proceeding in Figure 1 from left to right, the following elements can be observed. The input signals (eg, AU-4) are physically connected to the synchronization circuits Sync by means of which the same-phase synchronization of all the input signals to the internal clock of the switching field is accomplished. The synchronization circuits contain a flexible buffer by means of which the signal frames are synchronized to be nearly of the same phase. The space and the time switches are capable of switching TU-2, TU-3, and AU-4 signals as TU-12 signals. This naturally presupposes that when TU-3 and AU-4 signals are involved, columns 1-18 in the STM-N frame can be processed separately. This makes it possible for the routing algorithm to process all the signal levels as if they were TU-12 signals.

The input signals are grouped together into groups having n inputs IN (eg, n*AU-4), which after the synchronization circuits are directed to the time switches TSW (n*n). The outputs of the time switches are connected to the space switches SSW, which have n...2n outputs OUT. There are m blocks of the input side, whereby the total number of signals coming to a switching field is n*m. From the space switches of the input side the output signals are fanned out to the centremost stage MSW of the switching field. The phasing of the signals to precisely the same phases takes place in each space switch separately by means of a flexible buffer.

The space-time switching blocks of the output side are arranged symmetrically with the input side, ie, the space switches n...2n IN SSW, which have n...2n inputs IN and n outputs OUT. The time switches have n inputs and n outputs. The cross connected output signals of the switching field are obtained from the outputs of the time switches TSW.

The number n can be, for example, 8 or 16 as appropriate and m can be, for example, in the range 8 - 256. The TSW and SSW switches are structurally of a form that is known as such to one versed in the art and therefore they are not discussed here in any more detail.

The centremost switching blocks MSW can be of the form STS or (TxT)S. In a simple STS case, SSW blocks and TSW switches can be used which structurally correspond to the corresponding switches of the TS and ST blocks of the input and output sides.

In this patent application no stand is taken regarding the routing of the signals through the switching network because it depends completely on the manner in which the routing algorithm is implemented. Certain examples of the principles underlying a routing algorithm can nevertheless be given:
The algorithm in the example comprises three parts:
   1) a general solution is obtained for the signals that travel through the time and space switches TSW-SSW of the input side (on the left hand side in Figure 1);
   2) a general solution is obtained for the signals that travel through the centremost MSW switch stage; and
   3) a general solution is obtained for the signals that travel through the space and time switches SSW-TSW of the output side (on the right hand side in Figure 1).
In the example, the signals in the time and space switches of the input side are arranged such that the signals coming to an MSW block of the centre stage fulfil the condition:
   A) The number of signals coming to the MSW stage, which go to an ST block of the output side, ie, to the switch group SSW-TSW, must not exceed the number of time slots that are available. The signals leaving the TS blocks of the input side are first defined such that they fulfil condition A). When routes have been found for the output signals of the blocks of the input side according to condition A), a solution must be found for the signals that are output from the centre MSW block. In the example, two conditions are imposed on the outgoing signals:
   B) The outgoing signals should reach the correct ST block of the output side of the TS'(T&S)'ST structure; and
   C) Two or more time slots cannot be sent to the same port simultaneously.

The switching network in accordance with the invention operates nearly without blocking when provision is made that the same number of outgoing as incoming signals are handled at any given time in the TS blocks of the input side and the ST blocks of the output side. If it is necessary to make the switching network completely non-blocking, the number of the centremost space switch blocks containing time switching connections must be increased. Increasing the number of blocks also confers the possibility of very fast set-up of switching routes since after each connection provision is always made that all the extra blocks remain empty. If the number of the centremost space switch blocks containing time switching connections is doubled compared with the minimum situation, this can in practice guarantee the making of a sufficiently large number of switching connections simultaneously.

The figure does not show separately the control of the switch blocks because this can be accomplished in a way that is known to one versed in the art. The essential point nevertheless is that in each switching element there is a duplex control memory, one part of which is in active use at any given time whilst the other is passive so as to write a new control data signal. Before reconnecting, the new control signal is written to the switching memories that are passive. Thereafter a special signal is used to indicate to each switching element that a swap of the control memory will occur at the beginning of the next frame. Because the control swap is performed at the beginning of the signal frame, for example, at the beginning of the SDH AU-4 signal frame, the main signal does not incur interference. This is based on the fact that the beginning of the signal frame does not contain significant data that must be transmitted. When the swap has taken place, the previously active memories that have been marked passive are updated with the data according to the new switching situation.

The idea of the architecture according to the invention is to use relatively small switching elements. This means that an element is implemented, for example, as an integrated circuit or by combining an appropriate number of integrated circuits, for example, 4 - 16, on the same circuit board.

## Claims

1. A cross connect architecture for the switching of digital signals whereby the switching network comprises an input stage, a centre stage and an output stage whereby the inputs of each centre stage block are connected to the output of several input stage blocks and the outputs to the input of several output stage blocks, **characterized in that**
- the input stage is composed of parallel (1...m) time-space switch blocks (TSW-SSW),
- the centre stage is composed of parallel blocks (MSW) formed by time and space switches, and
- the output stage is composed of parallel (1...m) space-time switch blocks (SSW-TSW).

2. A cross connect architecture in accordance with claim 1, **characterized in that** the switch blocks of the centre stage (MSW) are composed of space-time-space switches (STS).

3. A cross connect architecture in accordance with claim 1, **characterized in that** the switch blocks of the centre stage (MSW) are composed of time-time-space switches (TxT-S).

4. A cross connect architecture in accordance with any of the above claims, **characterized in that** the switch blocks of the input stage have n inputs (IN) and n...2*n outputs (OUT) and that the switch blocks of the output stage have n...2*n inputs (IN) and n outputs (OUT).

5. A cross connect architecture in accordance with any of the above claims, **characterized in that** the number of the switch blocks of the centre stage is greater than the number required for the nominal capacity.

6. A cross connect architecture in accordance with claim 5, **characterized in that** the number of the switch blocks of the centre stage is double that of the number required for the nominal capacity.

7. A cross connect architecture according to any of the above claims, **characterized in that** synchronous circuits (Sync) are connected to the input stage which synchronous circuits synchronize the input signals in the same phase mode to the internal clock of the switching network.

8. A cross connect architecture in accordance with any of the above claims, **characterized in that** each switch block (TSW, SSW, MSW) has two control memories, one of which is in active use at any given time and the other passive for outputting a new control data signal,
- whereby the new control data signal is written to the switching memories that are passive before reswitching,
- whereby a special signal is employed to indicate to each switching element that a swap of the control memory will occur at the beginning of the next frame,
- whereby when the swap has occurred, the previous active memories that were marked passive are updated with data according to the new switching situation.

9. A cross connect architecture in accordance with any of the above claims, **characterized in that** parts of the signals of the AU-4, TU-3 and TU-2 levels can be connected in the switching elements, such as the signals of the TU-12 level, whereby when the AU-4 and TU-3 signals are involved, columns 1-18 of the STM-1 frame require their own control.

10. A cross connect architecture in accordance with any of the above claims, **characterized in that** the new connections are made in two phases, whereby first the new signals are routed via the empty centre blocks (MSW blocks), after which packing is carried out, whereby the extra blocks are again made empty.

11. Use of a cross connect architecture in accordance with any of the above claims for the cross connection of SDH signals (STM-1...STM-16) or ATM signals.

## Patentansprüche

1. Cross-Connect-Architektur zur Vermittlung von digitalen Signalen, wobei das Vermittlungsnetz eine Eingangsstufe, eine zentrale Stufe und eine Ausgangsstufe umfasst, wobei die Eingänge jedes Blocks der zentralen Stufe mit dem Ausgang mehrerer Blöcke der Eingangsstufe verbunden sind und die Ausgänge mit dem Eingang mehrerer Blöcke der Ausgangsstufe verbunden sind,
**dadurch gekennzeichnet, dass**
- die Eingangsstufe aus parallelen (1 ... m) Zeit-Raum-Schaltblöcken (TSW-SSW) zusammengesetzt ist,
- die zentrale Stufe aus parallelen Blöcken (MSW) zusammengesetzt ist, die durch Zeit- und Raum-Schalteinrichtungen gebildet sind, und
- die Ausgangsstufe aus parallelen (1 ... m) Raum-Zeit-Schaltblöcken (SSW-TSW) zusammengesetzt ist.

2. Cross-Connect-Architektur nach Anspruch 1,
**dadurch gekennzeichnet, dass**
die Schaltblöcke der zentralen Stufe (MSW) aus Raum-Zeit-Raum-Schalteinrichtungen (STS) zusammengesetzt sind.

3. Cross-Connect-Architektur nach Anspruch 1,
**dadurch gekennzeichnet, dass**
die Schaltblöcke der zentralen Stufe (MSW) aus Zeit-Zeit-Raum-Schalteinrichtungen (TxT-S) zusammengesetzt sind.

4. Cross-Connect-Architektur nach einem der vorhergehenden Ansprüche,
**dadurch gekennzeichnet, dass**
die Schaltblöcke der Eingangsstufe n Eingänge (EIN) und n ... 2 x n Ausgänge (AUS) aufweisen und dass die Schaltblöcke der Ausgangsstufe n ... 2 x n Eingänge (EIN) und n Ausgänge (AUS) aufweisen.

5. Cross-Connect-Architektur nach einem der vorhergehenden Ansprüche,
**dadurch gekennzeichnet, dass**
die Anzahl der Schaltblöcke der zentralen Stufe größer als die für die nominelle Kapazität erforderliche Anzahl ist.

6. Cross-Connect-Architektur nach Anspruch 5,
**dadurch gekennzeichnet, dass**
die Anzahl der Schaltblöcke der zentralen Stufe doppelt so groß wie die für die nominelle Kapazität erforderliche Anzahl ist.

7. Cross-Connect-Architektur nach einem der vorhergehenden Ansprüche,
**dadurch gekennzeichnet, dass**
Synchronschaltungen (SYNC) mit der Eingangsstufe verbunden sind, wobei die Synchronschaltungen die Eingangssignale in den gleichen Phasenmodus zu dem internen Takt des Vermittlungsnetzes synchronisieren.

8. Cross-Connect-Architektur nach einem der vorhergehenden Ansprüche,
**dadurch gekennzeichnet, dass**
jeder Schaltblock (TSW, SSW, MSW) zwei Steuerspeicher aufweist, von denen einer zu einem gegebenen Zeitpunkt aktiv verwendet wird und der andere passiv ist, zur Ausgabe eines neuen Steuerdatensignals,
- wobei das neue Steuerdatensignal in die Schaltspeicher geschrieben wird, die vor dem Umschalten passiv sind,
- wobei ein spezielles Signal angewendet wird, um jedem Schaltelement anzuzeigen, dass ein Wechsel des Steuerspeichers zu Beginn des nächsten Rahmens auftreten wird,
- wobei, wenn der Wechsel erfolgt ist, die vorherigen aktiven Speicher, die als passiv markiert wurden, mit Daten entsprechend der neuen Schaltsituation aktualisiert werden.

9. Cross-Connect-Architektur nach einem der vorhergehenden Ansprüche,
**dadurch gekennzeichnet, dass**
Teile der Signale der Hierarchiestufen AU-4, TU-3 und TU-2 in den Schaltelementen verbunden werden können, wie etwa die Signale der TU-12-Stufe, wobei, wenn die AU-4-und die TU-3-Signale beteiligt sind, die Spalten 1 - 18 des STM-1-Rahmens ihre eigene Steuerung erfordern.

10. Cross-Connect-Architektur nach einem der vorhergehenden Ansprüche,
**dadurch gekennzeichnet, dass**
die neuen Verbindungen in zwei Phasen hergestellt werden, wobei zuerst die neuen Signale über die leeren zentralen Blöcke (MSW-Blöcke) geführt werden, wonach das Packen erfolgt, wobei die zusätzlichen Blöcke wieder geleert werden.

11. Verwendung einer Cross-Connect-Architektur nach einem der vorhergehenden Ansprüche zum Rangieren von SDH-Signalen (STM-1 ... STM-16) oder ATM-Signalen.

## Revendications

1. Architecture d'interconnexion pour la commutation de signaux numériques moyennant quoi le réseau de commutation comprend un étage d'entrée, un étage central et un étage de sortie moyennant quoi les entrées de chaque bloc de l'étage central sont connectées à la sortie de plusieurs blocs de l'étage d'entrée et les sorties à l'entrée de plusieurs blocs de l'étage de sortie **caractérisée en ce que**:
- l'étage d'entrée est composé de blocs de commutation temps-espace (TSW-SSW) parallèles (1...m),
- l'étage central est composé de blocs parallèles (MSW) faits de commutateurs espace et temps, et
- l'étage de sortie est composé de blocs de commutation espace-temps (SSW-TSW) parallèles (1...m).

2. Architecture d'interconnexion selon la revendication 1, **caractérisée en ce que** les blocs de commutation de l'étage central (MSW) sont composés de commutateurs espacé-temps-espace (STS).

3. Architecture d'interconnexion selon la revendication 1, **caractérisée en ce que** les blocs de commutation de l'étage central (MSW) sont composés de commutateurs temps-temps-espace (TxT-S).

4. Architecture d'interconnexion selon l'une quelconque des revendications précédentes, **caractérisée en ce que** les blocs de commutation de l'étage d'entrée ont n entrées (IN) et n...2*n sorties (OUT) et **en ce que** les blocs de commutation de l'étage de sortie ont n...2*n entrées (IN) et n sorties (OUT).

5. Architecture d'interconnexion selon l'une quelconque des revendications précédentes, **caractérisée en ce que** le nombre de blocs de commutation de l'étage central est plus important que le nombre requis pour la capacité nominale.

6. Architecture d'interconnexion selon la revendication 5, **caractérisée en ce que** le nombre de blocs de commutation de l'étage central est le double du nombre requis pour la capacité nominale.

7. Architecture d'interconnexion selon l'une quelconque des revendications précédentes, **caractérisée en ce que** des circuits synchrones (Sync) sont connectés à l'étage d'entrée, ces circuits synchrones synchronisant les signaux d'entrée dans le même mode phase que l'horloge interne du réseau de commutation.

8. Architecture d'interconnexion selon l'une quelconque des revendications précédentes, **caractérisée en ce que** chaque bloc de commutation (TSW, SSW, MSW) a deux mémoires de contrôle, dont l'une est utilisée de façon active à tout moment donné et l'autre est passive pour sortir un nouveau signal de données de contrôle,
- moyennant quoi le nouveau signal de données de contrôle est enregistré dans les mémoires de commutation qui sont passives avant la nouvelle commutation,
- moyennant quoi un signal spécial est employé pour indiquer à chaque élément de commutation qu'une permutation de la mémoire de contrôle va avoir lieu au début du prochain cadre,
- moyennant quoi lorsque la permutation a eu lieu, les anciennes mémoires actives qui étaient marquées passives sont mises à jour avec des données selon la nouvelle situation de commutation.

9. Architecture d'interconnexion selon l'une quelconque des revendications précédentes, **caractérisée en ce que** des parties des signaux des niveaux AU-4, TU-3 et TU-2 peuvent être connectées dans les éléments de commutation, tels que les signaux du niveau TU-12, moyennant quoi lorsque les signaux AU-4 et TU-3 sont impliqués, les colonnes 1-18 du cadre STM-1 exigent leur propre contrôle.

10. Architecture d'interconnexion selon l'une quelconque des revendications précédentes, **caractérisée en ce que** les nouvelles connexions sont faites dans deux phases, moyennant quoi les nouveaux signaux sont d'abord acheminés via les blocs centraux vides (blocs MSW), après quoi le compactage est réalisé, moyennant quoi les blocs supplémentaires sont à nouveau vidés.

11. Utilisation d'une architecture d'interconnexion selon l'une quelconque des revendications précédentes pour l'interconnexion de signaux SDH (STM-1...STM-16) ou de signaux ATM.
